# EUROPEAN PATENT SPECIFICATION

(11) **EP 2 045 143 B1**
(45) Date of publication and mention of the grant of the patent: **27.07.2016**
(21) Application number: 07117762.0
(22) Date of filing: 02.10.2007
(51) Int. Cl.: B60R 21/01, B60R 22/46

(54) **Method and arrangement for load limiting of a safety belt**
Verfahren und Anordnung zur Belastungsbegrenzung eines Sicherheitsgurtes
Procédé et agencement de limitation de charge d'une ceinture de sécurité

(43) Date of publication of application: 08.04.2009
(73) Proprietor: Volvo Car Corporation, 405 31 Göteborg (SE)
(72) Inventor: Hardå, Peter, 413 24 Göteborg (SE); Persson, Jörgen, 411 25 Göteborg (SE); Wallin, Andreas, 427 38 Billdal (SE); Tidborg, Fredrik, 414 72 Göteborg (SE)
(74) Representative: Zacco Sweden AB

(56) References cited:
- EP-A- 0 893 313
- EP-A- 1 104 721
- EP-A2- 1 839 960
- WO-A-01/45985
- DE-C1- 10 132 681
- US-A1- 2004 083 042

## Description

### TECHNICAL FIELD

The invention relates to a method and a system for limiting the load of a vehicle safety belt in case of an emergency. The method and system comprises means for detecting and predicting the severity of a crash in order to adapt the belt force to the crash conditions.

### BACKGROUND ART

The use of belt force load limiters, i.e. a device which limits the restraining force of a safety seat belt in case of a crash or sudden brake, in vehicles has become more and more common today. The purpose of these belt force load limiters is to avoid or reduce injuries on a person seated and belted in a vehicle seat due to an unnecessary hard restraining force from the belt in case of an accident. Until today, there have been suggested several methods and devices for performing a relief in the load effectuated on a body from a safety belt in a crash situation.

In EP 734 922 is discussed and described how the belt force limiter is adjusted with respect to the person belted in the seat, e.g. weight and size of the occupant. However, this limiter will actually only be a limiter for small persons and not for larger persons since the belt limiter works essentially as an adapter for persons belted in the seat according to their weights and does not take into consideration the circumstances of the crash situation.

However, DE 196 04 483 describes a method which takes into account data from the actual crash situation and intends to adapt the force from the belt to be optimized with respect to the forces from the belt working on the seated person and the permissible extension of the belt.

In US 6,513,616 an arrangement similar to DE 196 04 483 is described which also take into account the outer circumstances such as the crash violence but also adapt the belt force limiting system to be dependent on and cooperating with other safety systems such as an air bag. When it is decided that the air bag is triggered and has been inflated, the force limiter will start to work and the restraints from the belt is thus reduced.

EP1104721, considered the closest prior art according to Art.54(2) EPC, discloses a belt retractor of the occupant restraint system comprises a frame, a belt reel rotatably mounted in the frame, a locking mechanism for selectively blocking the belt reel and a vehicle-sensitive sensor. The locking mechanism is actuated by an actor. An electronic control unit is provided with an input interface and an output interface. The vehicle-sensitive sensor is connected to the input interface and the actor is connected to the output interface.

EP0983313 discloses an arrangement rolls the safety belt onto a spool roller rotatably mounted on a frame in a motor vehicle. An electric motor is coupled to the spool roller in both directions of rotation to apply adjustable torque to the roller depending on defined driving situations. A transmission between the electric motor and the spool roller can be controlled, depending on sensor signals, into different switching positions for belt comfort, with a limited restraining force being exerted by the belt and tightening of the belt.

WO2001045985 discloses a passive safety system for a motor vehicle has a plurality of safety devices that are movable by associated drives from a normal state into a crash-induced safety state. The safety system also includes a precrash sensor system that can actuate one or more safety devices to a safety intermediate position. As a function of the subsequent driving situation the respective safety device is brought into the safety state and is kept in the safety state or is brought back to the normal state.

EP1839960, considered prior art according to Art.54(3)EPC, discloses a method for operating a motor vehicle having a precrash sensing system. The method is characterised in that it comprises the steps of determining a pre-crash collision confidence factor and deploying a restraint system based upon the confidence factor. The document also discloses a motor vehicle corresponding to the disclosed method claim.

US 2004/083042 discloses a crash assessment and safety device activation system including a host object in motion. A remote sensor is coupled to the host object and adapted to detect a target object within a region sensed by the remote sensor and generate an object signal from the target object. A visual sensor is adapted to sense the region sensed by the remote sensor and therefrom generate a visual signal. A safety device actuator is coupled to the host object and adapted to activate a safety device. A controller is coupled to the host object, the remote sensor, the visual sensor and the safety device actuator. The controller is adapted to assess collision threat from the remote sensor signal and confirm the presence of the target object with the vision sensor. The controller is further adapted to control the safety device actuator in response said threat assessment.

Even though these systems provide improvements in vehicle safety and disclose different manners of limiting the safety belt force working on an occupant of a seat, there is still a need to improve these systems in order to more efficiently limiting the force in an appropriate way. Hence, there is a need for an improved method and system for control of a belt limiting force in a vehicle in order to improve the safety of the occupants.

### DISCLOSURE OF INVENTION

The present invention provides a method for controlling an Adaptive Belt Load Limiter (ABLL) for a vehicle safety belt in a vehicle which overcomes the deficiencies of the above described system. In order to improve the system, the present invention is focused on two essential problems for improving such a system: An early detection of a crash situation and a reliable estimation of the crash scenario such that the ABLL at an early stage is provided with the right control signal. Hence, the present invention is directed to provide a control system which by the use of an advanced Closing Velocity Sensor (CVS) system is able to detect an upcoming crash situation. Depending on the sensor signals from the CVS, the severity of a crash scenario is estimated by a Restraints Control Module (RCM) which further prepares a control signal or control sequence based on the crash severity estimation. The control signal is sent to an Adaptive Belt Load Limiter (ABLL) and the control signal may reach the ABLL at an early stage, most preferably before an impact or before the impact is sensed by sensors indicating the actual status of the vehicle.

However, in some cases there will not be a control signal sent at an early stage since the desired control is to keep the ABLL at the default level and no control signal is needed. Furthermore, there are cases, i.e. crash scenarios, when there is a desire to use other relevant sensor data such as accelerometers or other sensors indicating the actual status of the vehicle which may be used to verify the estimated crash severity by CSV. However, the CSV sensor data is very useful also in these cases since it provides additional data which make it possible to select a more appropriate control strategy for the ABLL.

According to the invention, the above stated problems are solved by the use of a control method for a belt force limiter which comprises the step of:
- Using one or several Closing Velocity Sensor(s) (CVS) capable of sensing the presence of an object in at least two different spatial areas and being able to distinguish the sensed signals from each other. By the use of CVS which are able to detect the existence of an object (or several objects) approaching the vehicles from different directions and being able to distinguish in which direction a detected object is located, it will be possible to better classify different kinds of crashes and thus use this information in deciding or classifying the severity of a probable crash situation. These area dependent CVS are preferably mounted such that they cover at least areas straight ahead of the vehicle's front and areas which are on the left and right side in front of the vehicle. The numbers of sensors or areas which are covered may vary as well as the size and shape of the areas which are covered. In general, the shape of the areas shall be such that the areas are mirrored with respect to a line along the longitudinal centre line of the vehicle such that the left respectively the right side in front of the vehicle are equally covered. However, in certain cases it may be desirable to use different covering of the left and right front areas, e.g. due to certain desires for the side facing the centre line and thus closest to face traffic in the opposite direction (normally the left side of the vehicle as seen from the driver's position) and for the side facing the side line and thus closest to the side of the road (normally the right side). There may also be sensors covering the areas right at the sides of the vehicle if desired. The sensors may cover areas such that they do not overlap or such that they overlap to a certain part. In general, it is preferred to mount the sensors such that they do not overlap or only have small areas overlapping in order to better distinguish in which direction an object is detected. By the use of area specific CVS it will be possible to make a more reliable classification of different kinds of crashes before the accident actually occurs and thus enable the preparation of an appropriate control signal for a belt force limiting action in due time to control an adaptive belt load limiter to a desired level.

- Generating sensor signals corresponding to the sensed condition in the at least two spatial areas covered by the CVS such that area specific signals are generated. Hence, the area specific CVS will send signals concerning the status in the area they cover, e.g. the detection of an object, an estimated size and shape of the object and/or the relative velocity and direction of the object. It may some times be desirable not to use signals from more than the at least two spatial areas covered by the CVS depending on different conditions, e.g. when driving on different kind of roads or depending on the traffic situation.
- Transmitting the sensor signals from the Closing Velocity Sensor(s) to a Restraints Control Module (RCM). This means that all sensor signals, or in case some of the signals have been deselected, only the relevant sensor signals, are transferred such that the sensor signals are separate and can be identified as representing a specific sensor or area.
- Using the sensor signals from the Closing Velocity Sensor(s) in the Restraints Control Module for generating a control signal, said control signal being generated in dependence on the spatial area wherefrom the signals originate. Hence, the control signal from the RCM may vary depending on from which sensor or area the sensor signals are originating, e.g. in case of having 3 sensor signals corresponding to an area straight ahead of the vehicle and the other sensors corresponding to an angled left respectively right front area, the control signal may have different outputs if the same condition is sensed in the front centre area or in one of the front side areas. Still another signal may be outputted if the sensor signals indicate an object in two of the areas or in all areas. However, the RCM may use further input data than only the sensor signal from the CVS to generate the control signal, e.g. ego vehicle speed, ego vehicle acceleration or the weight of the occupant belted in the seat. The control signal may also be dependent on control signals sent to other safety systems in the case of a crash situation. During certain circumstances, e.g. above a speed limit, the input from the CVS may be overruled such that the RCM control signal corresponds to maximum allowed restraint.

- Transmitting said control signal to an Adaptive Belt Load Limiter (ABLL). The output control signal from the RCM thus contains instructions on how the ABLL shall perform.
- Controlling the Adaptive Belt Load Limiter according to the control signal. In general, the belt is set to a standard, default value which is adapted to restrain a large load which is the initial value and the control signal from the RCM controls the restrain of the belt by the ABLL to be lowered. However, the ultimate control scenario would be to have a step less restraint control mechanism which is able to restrain the forward motion of the belted person at the same load during the complete crash situation until the movement of the belted person stops at the maximum allowed forward motion. However, many load limiters are adapted to irreversibly change over from a first, heavy load absorbing level to a second light load absorbing level. In this case, the ultimate scenario is to adapt the load limiter to switch between the two load levels at the point where enough energy has been absorbed at the heavy load absorbing level such that the remaining energy may be absorbed at the light load absorbing level while the belted person stops at the maximum allowed forward motion (or, in case the total impact energy is equal to or smaller than the maximum energy absorption at the light load absorbing level, using the light load absorbing level during the complete crash scenario)

The prediction of an accident by such a CVS as described above is particularly suitable for controlling the belt load limiter since it is of high importance to be able to accurately decide the appropriate load level before a crash has occurred since the belt will start to function at the same instant the crash situation starts in contrast to an air bag cushion which is intended to be working at a later stage in the accident. Furthermore, the possibility to classify the accident by the use of area specific CVS will make it possible to better predict the estimated impact force or the severity of the crash since there is a great difference in an front offset or angled collision compared to a full frontal impact collision. This information may thus be used to adapt the seat belt restraining force. By the use of classification of different types of crashes for adapting the belt force load to the crash severity, it may be avoided injuries of a belted occupant due to an unnecessary large belt restraining force. This distinction of different crashes is more important for controlling the belt load force than for deciding for example whether or not an air bag shall be activated or a pretension of the belt shall be made since these countermeasures usually only have a simple on and off triggering and need not to be controlled to different levels.

According to one specific embodiment of the invention, the one or several CVS covers three different spatial areas and are able to distinguish the sensed signals from each area corresponding to a middle front area, a left front area and a right front area. An example of a suitable sensor arrangement is for example disclosed in US 2007/0032952.

According to still another embodiment of the invention, which may be used alone or together with the foregoing embodiment, the RCM is provided with ports for data input signals corresponding to vehicle speed and/or acceleration such that a crash severity estimation may be performed based on the sensor signals from the different areas covered by the Closing Velocity Sensor(s), the vehicle speed and/or vehicle acceleration.

According to still another embodiment of the invention, which may be used alone or together with any of the foregoing embodiments, is the RCM provided with or connected to a Look Up Table (LUT). The LUT comprises a crash type classification scheme, such that different crash types are classified based on the sensor signals from the Closing Velocity Sensor(s) corresponding to the detection of an object in the different areas and a control signal is generated by the RCM by using said LUT. If for example the CVS is configured to indicate an object in three different regions (front left, front centre and front right) the LUT may include different classification such as centre pole crash (only the front centre area indicates an object), offset/ angled right crash (only the front right area indicates an object), offset/ angled left crash (only the front left area indicates an object) and full frontal crash (all three areas or at least two of the areas are indicated). Of course it would also be possible to differentiate the different conditions representing the full frontal crash into further divided classification depending on if an object is detected in 2 or 3 areas or to combine the offset/ angled right and left as the same class of crash. Still further, it may also be possible to differentiate the control signal for the left respectively right seat belt load limiters when there is an offset/angled crash situation such that different control signals are sent to the respective left and right side belt load limiters since the impact force is different on the different sides. Hence, depending on the numbers of different areas sensed the CVS, a number of different crash classifications may be done and appropriate control signals for the different types of crashes may be tried out by crash tests and/or simulations such that the RCM is tuned to best control the ABLL. To be noted, the control signal which is obtained from the LUT may either be such that it may be directly sent to the ABLL or may be further processed by the RCM before it is sent to the ABLL.

In still an embodiment which may be used together with the foregoing embodiment, the RCM is provided with or connected to several sets of LUTs whereof the appropriate LUT to be used is selected by using at least one of the parameters ego vehicle speed, ego vehicle acceleration, closing velocity of an approaching object or weight of the belted occupant. Hence, there are different LUTs, which are selected depending on desired parameters concerning the vehicle and the environment, such that when the relevant conditions of the crash scenario is known or estimated, the right LUT is selected from which a relevant parameter is retrieved to either be further processed by the RCM for creating a control command for the ABLL or used directly as a control signal to the ABLL.

It is of course also possible to use some arithmetic formula for calculating the control signal instead of using LUT.

According to still another embodiment of the invention, which may be used together with any of the previous embodiments described, the control signal from the RCM to the ABLL is a signal which controls the length of the safety belt pay out roll at a standard load level before the force limiter is activated. One way of deciding the belt pay out length is to measure the number of revolutions the roll has made. The control signal may also indicate a certain time period to lapse before the belt force limiter is activated but in general it is considered to be more accurate to control the length of the belt which has been paid out. This control system is in particular designed for a seat belt construction with an ABLL which irreversibly changes the belt force limiting action from a standard state (i.e. where no extra belt force limitation is added) to a second state where a predefined belt force limitation is added, i.e. in the cases where it is only possible to switch between two different belt restrain forces. However, it is obvious that the strategy of controlling the belt pay out length as the relevant parameter for switching between different restrain force levels would work for a load limiter able to switch between several load limitation levels as well as for a load limiter which may both rise and lower the belt restrain forces.

The invention further relates to a belt force limiting system for performing the method described above, said system comprising one or several Closing Velocity Sensor(s) (CVS) for detecting objects in front of the vehicle. By this is meant that the objects need not to be straight ahead of the vehicle but may also be in front of the vehicle at either side. The system further comprises a Restraints Control Module (RCM) connected to the CVS in order to receive sensor input data from the CVS. The RCM is adapted to use the sensor input data in order to generate an output control signal. The control signal may of course also be dependent on other parameters than the CVS signals. The system further comprises an Adaptive Belt Load Limiter (ABLL) connected to the RCM. The ABLL is adapted to receive the output control signal from the RCM and effectuate the belt load limiting action. The system is characterised in that the one or several Closing Velocity Sensor(s) is capable of sensing the presence of an object in at least two different spatial areas, e.g. in the middle part in front of the vehicle or angled at the right or left side in front of the vehicle. The CVS signals from the different areas or zones are kept separate such that area specific signals are generated and the RCM is adapted to generate a control signal to the ABLL which is dependent on the sensed condition in the at least two spatial areas. Hence, the system shall enable the differentiating of signals originating from different areas and take into consideration from which area a signal is originating when generating the control signal.

According to one embodiment of the belt force limiting system, the one or several Closing Velocity Sensor(s) covers three different spatial areas and is able to distinguish the sensed signals from each area corresponding to a middle front area, a left front area and a right front area. It is of course possible to use further sensors or modify the existing sensors in order to specify further, more narrow areas or to cover a larger total zone.

According to still another embodiment of the belt force limiting system, which may be used together with the earlier embodiment or alone, the system also comprises speed and/or acceleration sensors which are connected to the Restraints Control Module. The input signals from these sensors, in addition to the signals from the CVS, may also be used for generating the control signal for the Adaptive Belt Load Limiter (ABLL).

According to still another embodiment of the belt force limiting system, which may be used together with any of the earlier embodiments or alone, the RCM is provided with or connected to one or several Look Up Tables (LUT). The LUTs comprises a crash type classification scheme, such that different crash types are classified based on the sensor signals from the CVS corresponding to the detection of an object in the different areas covered by the CVS. Optionally, different LUTs are used depending on at least one of the parameters ego vehicle speed, ego vehicle acceleration, closing velocity of an approaching object or weight of the belted occupant.

According to still another embodiment of the belt force limiting system, which may be used together with any of the earlier embodiments or alone, the RCM is adapted to generate a control signal to the ABLL which controls the length of safety belt pay out roll at a standard level before the force limiter is activated.

The invention further relates to the use of one or several Closing Velocity Sensor(s) capable of sensing the presence of an object in at least two different spatial areas and being able to distinguish the sensed signals from each other for controlling a belt force limiter for a vehicle safety belt in a vehicle.

According to one embodiment, the invention is directed to the use of one or several CVS which cover three different spatial areas corresponding to a middle front area, a left front area and a right front area and being able to distinguish the sensed signals from each area.

### BRIEF DESCRIPTION OF DRAWINGS

- FIG. 1: Shows a schematic figure of a system for the control of an Adaptive Belt Load Limiter according to an embodiment of the invention.
- FIG. 2: Shows an example of Look Up Tables for different classifications of a crash scenario
- Fig 3: Shows an example of a Closing Velocity Sensor (CVS) system suitable for the present invention

### EMBODIMENT(S) OF THE INVENTION

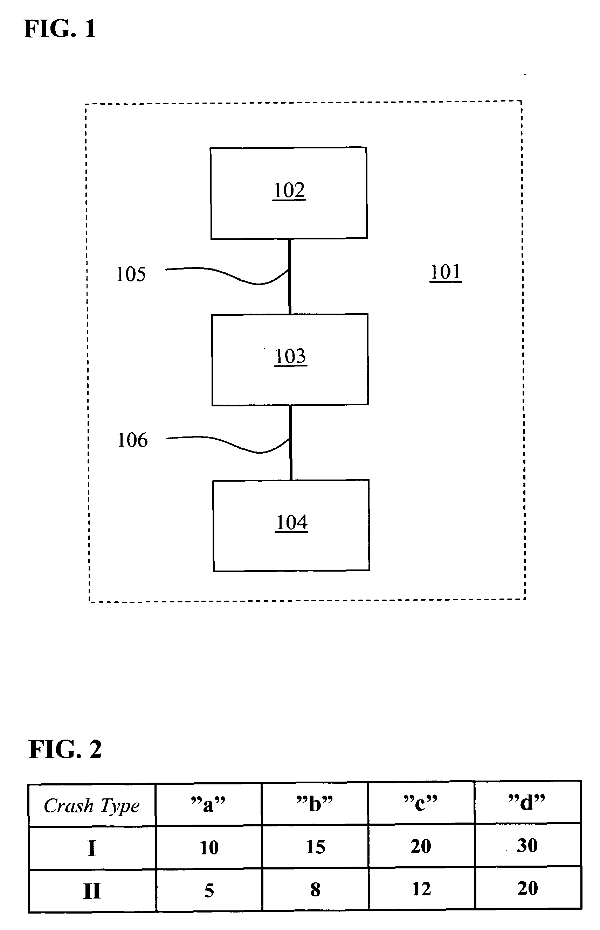

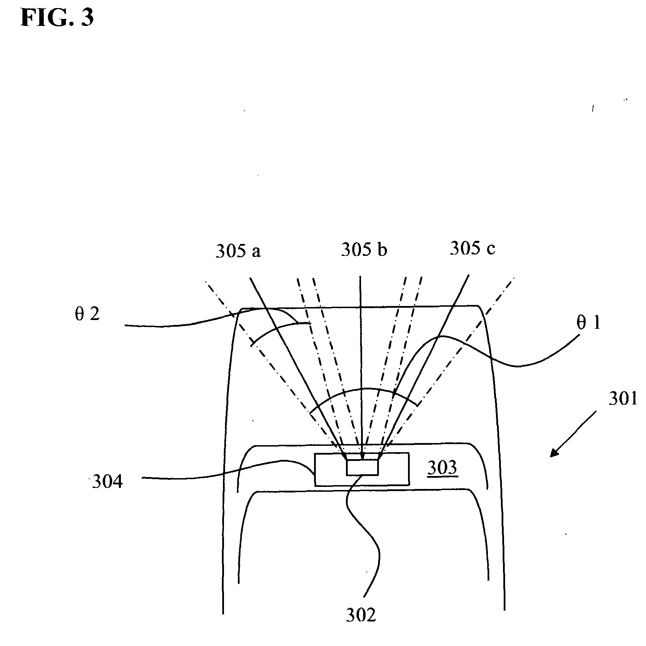

In figure 1, a schematic drawing shows the main components associated with the present belt load control safety system 101. The system 101 comprises a Closing Velocity Sensor (CVS) 102, a Restraints Control Module (RCM) 103 and an Adaptive Belt Load Limiter (ABLL) 104. The CVS 102 is specified to be able to detect an object in at least two different areas and a suitable CVS for the present invention is described in figure 3. However, any CVS able of detecting objects in at least two areas which not are identical, i.e. they do not completely overlap each other but may be either covering totally separate areas or partly overlapping areas, may be used in the system described in figure 1.

The CVS 102 is connected to the RCM 103 such that sensor signals from the CVS 102 may be transmitted to the RCM 103 through a connection 105. The connection may either be a wire connected to an output port on the CVS 102 and an input port on the RCM 103 or a wireless connection having a sender connected to the CVS 102 and a receiver connected to the RCM 103. It may of course also be possible to have a two way connection or a second connection such that signals may be sent from the RCM 103 to the CVS 102, e.g. control signals in order to set desired parameters for the CVS such as sample interval and/or to control the shape, size and overlapping of different areas. However, within the scope of the inventive idea, the essential feature of this connection 105 is that sensor signals from the CVS 102 are transmitted to the RCM 103 while additional use of communication between the CVS 102 and the RCM 103 may be used in addition in order to improve the system 101.

The RCM 103 is further connected to the ABLL 104 by a connection 106 such that control signals generated by the RCM 103 may be transmitted to the ABLL 104. The connection may either be a wire connected to an output port on the RCM 103 and an input port on the ABLL 104 or a wireless connection having a sender connected to the RCM 103 and a receiver connected to the ABLL 104. It may of course also be possible to have a two way connection or a second connection such that signals may be sent from the ABLL 104 to the RCM 103, e.g. signals sensing a relevant parameter of the ABLL such like the numbers of revolutions (or more exact, the turning angle) of a belt roll corresponding to the belt pay out length, in order to use the relevant information from the ABLL to influence the control signal. However, within the scope of the inventive idea, the essential feature of this connection 106 is that control signals generated by the RCM 103 are transmitted to the ABLL 104 while additional use of communication between the RCM 103 and the ABLL 104 may be used in addition in order to improve the system 101.

In this figure, the CVS 102, the RCM 103 and the ABLL 104 are represented as separate units or boxes. It is obvious for the skilled person in the art that for example the CVS 102 and the RCM 103 may be located in the same housing or the RCM and the ABLL 104 are located in a single housing. Furthermore, the RCM 103 need not to be a separate unit but may be a part of a vehicle safety system including numbers of other control functions.

The system 101 may further have a number of additional features added to the basic features in this drawing representing an embodiment of the invention. It may for example be added further input parameters, such as vehicle speed, acceleration data from accelerometers, weight of an occupant of a seat etc. representing data input which may be relevant for controlling the load of a belt in the vehicle. This may for example be achieved by connecting the RCM to a Local Area Network (LAN) or a Controller Area Network (CAN). There may also be a number of different control algorithms used depending on these input parameters which may be used in addition to the CVS. It is also advisable to use some kind of control function for the sensor signals from the CVS such that the signals represent a certain confidence level.

In fig. 2 is described a specific control algorithm which may be used for control of the Adaptive Belt Load Limiter (ABLL). In this particular embodiment of the invention, the ABLL is exemplified as being of a kind which may adapt the belt restriction force between two different levels: A first high load level and a second low level. The belt is reversibly switched from the high load level to the low load level by the ABLL in response to a control signal from the Restriction Control Module (RCM).

In fig. 2, a Look Up Table (LUT) is shown. In the first row, a first set of 4 different control parameters is contained in columns A to D and in the second row there is a second set of control parameters. The control parameters corresponds to a desired length (in centimetres) of the belt roll to be paid out before the ABLL changes the belt restriction force from its high load level to its low load level. In this case, the first set of control parameters in the first row corresponds to a stiff collision like a full frontal crash (e.g. when the CVS is configured to indicate the existence of an object in three different regions (front left, front centre and front right) and is sensing an object in all three areas) whereas the second set of control parameters in the second row corresponds to a "soft collision" like an angled, offset collision (e.g. when the same type of CVS as above only senses an object in either the left or right area). Hence, according to this scenario, a certain row in the LUT is selected depending on in which area, or areas, an object was detected. Furthermore, since each row contains four different options of which command to select, the right column (a, b, c or d) may be selected depending on different additional parameters. For example, the "a" column may corresponds to a speed of the vehicle of less than 10 km per hour and a closing velocity (detected by the CVS) of less than 20 km/h; the "b" column may correspond to a speed of the vehicle of 10 - 20 km/h and a closing velocity of less than 20 km/, the "c" column may correspond to a speed of the vehicle of less than "20" km/h and a closing velocity of 20 - 40 km/h and the "d" column may correspond to a speed of the vehicle of 20 - 30 km per hour and a closing velocity of less than 40 km/. Hence, if these parameters are fulfilled, the ABLL will be instructed to allow the belt restriction force to be at the high load level until the belt pay out length indicated in the appropriate place in the LUT is reached. When the desired pay out length is reached, the ABLL will switch over to the second low load level where the belt restraining force is lower. from the table one can read that in the case of a stiff collision (first row), the safety belt pay out length in high energy absorption mode is longer than for a soft collision (second row) when the other relevant parameters (closing velocity and vehicle speed) are the same, i.e. in the same column.

Fig. 2 only serves as an explanatory example of how a look up table may be used. In this example, the LUT will only be used if the vehicle speed is less than 30 km/h and the closing velocity speed sensed by the CVS is less than 40 km/h, otherwise the ABLL will not lower the belt force. Hence, the adaptive belt force limiter will in this case only be used in less severe crash situations such that it is assured that the belt force limiter not will be used when there is a severe accident which demands the use of a high load level of the belt force restriction.

The numbers comprised in the LUT shall not be considered as being suitable for all kinds of load limiter in any kind of car but must be adapted for each safety system in dependence on which kind of load limiters which are used and what different levels of restraining forces they have, the maximum allowed distance to pay out the belt and, preferably, to cooperate with other safety systems of the car. Since this LUT only is meant to be an example, it is obvious that there may be several further classifications of accidents, corresponding to the different rows, than the two rows present. There may of course also be further columns using further parameters, e.g. the weight of the occupant, the position of the seat (which may influence the total belt roll pay out) or accelerometer data, or using different intervals or adding new intervals or dividing the present intervals of the parameters used (vehicle speed and closing velocity of the detected object) in the LUT.

In FIG. 3, an example of spatial positioning of the Closing Velocity Sensor (CVS) 302 within a vehicle 301 is illustrated. The CVS 302 is located optionally behind the windscreen 303 at an upper region thereof, although other positions can be adopted if required. More optionally, the CVS 302 is included as part of a Windscreen Electronic Module (WEM) 304. Conveniently, the WEM 304 can also include other sensors, for example optical sensors for monitoring headlights of on-coming vehicles so as to provide the vehicle 301 with an automatic headlight-dimming function. For example, the CVS 302 is itself synergistically additionally capable of functioning as a precipitation sensor, for example a rain sensor, and as an ambient light sensor. Optionally, a threshold speed and/or a rate of deceleration in crash avoidance or crash mitigation situations can be modified in response to a precipitation condition detected by the CVS 302, for example to enhance controllability of the vehicle 301 in wet or icy conditions. The windscreen 303 should be fabricated from a material which allows three pulsed beams of infrared radiation 305a, 305b, 305c to propagate through the windscreen 305 and be subsequently reflected from oncoming objects in front of the vehicle 301 to generate corresponding reflected radiation which is received back at the closing rate (CVS) 302. By one or more of pulse-echo signal detection techniques and optical Doppler shift techniques, closing velocities of the oncoming objects can be computed at the closing rate sensor 302. By sending the signals at different times and/or having different characteristics of the signal sent, it may be possible to distinguish the different signals such that information concerning in which area or areas an upcoming object is detected.

Implementation and operation of the CVS 302 will now be described in greater detail. The CVS 302 is designed to be optionally mounted at a relatively high position onto or close to the windscreen 305 of the vehicle 301. Such a mounting position potentially provides an optimal field of view of a region in front of the vehicle 301, namely in a region wherein one or more potential impact hazards are likely to be encountered. The sensor 302 employs the three beams 305a, 305b, 305c to provide a sensing field having an approximate lateral angular extent of θ1=45° as depicted in FIG. 3. The sensing field is partitioned into three sectors, each sector being served by its corresponding beam 305a, 305b, 305c, such that the beams 305a, 305b, 305c each provide a lateral sensing coverage having an angel of substantially θ2=15° as depicted in FIG. 3. Moreover, each beam 305a, 305b, 305c also provides a vertical field of sensing of substantially 8° with an inclination of substantially 4° in respect of a horizontal plane. Each sensing sector is provided with a set of three corresponding lenses in the sensor 302. Moreover, light sensitive diodes are employed, each in combination with its three lenses, to sense reflection of the beams 305a, 305b, 305c reflected back to the sensor 302. The diodes and their respective lenses are beneficially optically shielded from their corresponding lasers employed for generating the beams 305a, 305b, 305c to reduce direct coupling of optical radiation from the lasers to their respective light sensitive diodes. The lasers or at least one of the lasers employed within the sensor 302 optionally exhibit an output radiation wavelength of substantially 905 nanometres and are class I laser category with regard to their radiation power output.

In operation, the CVS 302 provides distance and velocity information regarding one or more oncoming objects in front of the vehicle 301 at an update rate of substantially 100 Hz, namely at 10 millisecond intervals. When measuring position and velocity, a sensing cycle is optionally implemented in the sensor 302 for each of the sectors. The cycle commences by each laser in the sensor 302 providing a burst of laser radiation for emission from the sensor 302. The burst has a duration of 2 milliseconds and comprises 100 pulses of radiation, wherein each pulse has a duration of substantially 30 nanoseconds. For each pulse emitted from the sensor 302, the aforesaid light sensitive diodes are scanned for substantially 100 nanoseconds to derive reflected radiation signals. Thereafter, according to one embodiment, a sum of all intensities in the reflected radiation signals are used for performing a distance calculation, the calculation optionally being implemented using a simple "centre of mass" approach, thereby simplifying computation required. From a determination of distance as a function of time, a closing velocity can there from be derived. Thus, in overview, the sensor 302 employs time-of-flight (TOF) measurements of IR-laser pulses to calculate relative distances between the vehicle 301 and one or more potentially hazardous objects in front of the vehicle 301; measured distance changes within a well-defined period of time are used to generate relative velocity data and hence aforesaid closing velocity data for the Automatic Belt Load Limiter collision management system. In order to use the sensor data for classification of different crash types, it is possible to distinguish the sensor data received from each area.

However, it will be appreciated that the CVS 302 can also be implemented using optical or radar Doppler techniques, wherein a portion of reflected radiation from one or more oncoming objects in a direction of travel of the vehicle 301 is mixed at the sensor 302 with a portion of radiation emitted from the sensor 302 towards the one or more oncoming objects to generate a Doppler beat signal from which a measure of closing velocity of the one or more objects to the vehicle 301 can be derived.

It will be appreciated that embodiments of the invention described in the foregoing are susceptible to being modified without departing from the scope of the invention.

Although application of the present invention in the context of a road vehicle is described in the foregoing, it will be appreciated that the present invention is also applicable to trucks, lorries, vans, motorcycles, motorbikes and scooters to mention some examples. The term "vehicle" in the accompanying claims is therefore to be construed to include at least such a range of vehicle types.

## Claims

1. A method for controlling a belt force limiter (104) for a vehicle safety belt in a vehicle provided with sensors (102, 302) for detecting objects in front of the vehicle, said method comprising the steps of:
• using one or several closing velocity sensor(-s) (102, 302) capable of sensing the relative velocity and direction of an object in at least two different spatial areas and being able to distinguish the sensed signals from each other;
• generating sensor signals corresponding to the sensed condition in the at least two spatial areas such that area specific signals are generated dependent on the relative velocity and direction of said object;
• transmitting the sensor signals from the closing velocity sensor(s) (102, 302) to a restraints control module (103);
• using the sensor signals from the closing velocity sensor(s) (102, 302) in the restraints control module (103) for generating a control signal, said control signal being generated in dependence on the spatial area wherefrom the signals originate;
• transmitting said control signal to an adaptive belt load limiter (104); and
• controlling the adaptive belt load limiter (104) according to the control signal,
wherein said restraints control module (103) is provided with or connected to a look up table, said look up table comprising a crash type classification scheme, such that different crash types are classified based on the sensor signals from the closing velocity sensor(s) (102, 302) corresponding to the detection of the relative velocity and direction of an object in the at least two different spatial areas and a control signal is generated by the restraints control module (103) by using said look up table.

2. A method for controlling a belt force limiter (104) according to claim 1, ***characterised in* that** said one or several closing velocity sensor(s) (102, 302) covers three different spatial areas and being able to distinguish the sensed signals from each of the three areas corresponding to a middle front area, a left front area and a right front area.

3. A method for controlling a belt force limiter (104) according to any previous claim, ***characterised in* that** said restraints control module (103) is further provided with ports for data input signals corresponding to vehicle speed and/or acceleration such that a crash severity estimation may be performed based on the sensor signals from the different areas covered by the closing velocity sensor(s) (102, 302), the vehicle speed and/or vehicle acceleration.

4. A method for controlling a belt force limiter (104) according to any preceding claim, ***characterised in* that** the restraints control module (103) is provided with several sets of look up tables whereof the appropriate look up table to be used is selected by using at least one of the parameters ego vehicle speed, ego vehicle acceleration, closing velocity of an approaching object or weight of the belted occupant.

5. A method for controlling a belt force limiter (104) according to any preceding claim, ***characterised in* that** the control signal generated by the restraints control modules (103) is provided with several sets of look up tables whereof the appropriate look up table to be used is selected by using at least one of the parameters ego vehicle speed, ego vehicle acceleration, closing velocity of an approaching object or weight of the belted occupant.

6. A method for controlling a belt force limiter(104) according to any previous claim, ***characterised in* that** said control signal from said restraints control module (103) to said adaptive belt load limiter (104) is a signal which controls the length of safety belt pay out roll at a standard level before the force limiter (104) is activated.

7. A belt force limiting system (101) for a safety belt in a vehicle, said system comprising one or several closing velocity sensor(-s) (102, 302) for detecting objects in front of the vehicle, a restraints control module (103) connected to the closing velocity sensor(s) (102, 302) in order to receive sensor input data from the closing velocity sensors (102, 302), said restraints control module (103) adapted to use the sensor input data in order to generate an output control signal, said system further comprising an adaptive belt load limiter (104) connected to the restraints control module (103) in order to receive the output control signal from the restraints control module (103) and effectuate the belt load limiting action, the one or several closing velocity sensor(s) (102, 302) is capable of sensing the relative velocity and direction of an object in at least two different spatial areas such that area specific signals are generated and that the restraints control module (103) is adapted to generate a control signal to the adaptive belt load limiter (104) dependent on the sensed condition in the at least two spatial areas, ***characterised in* that** said restraints control module (103) is provided with or connected to one or several look up table comprising a crash type classification scheme, such that different crash types are classified based on the sensor signals from the closing velocity sensor(s) (102, 302) corresponding to the detection of the relative velocity and direction of an object in the at least two different spatial areas and, optionally, that different look up tables are used depending on at least one of the parameters: vehicle speed, vehicle acceleration, closing velocity of an approaching object or weight of the belted occupant.

8. A belt force limiting system (101) according to claim 7, ***characterised in* that** said one or several closing velocity sensor(s) (102, 302) covers three different spatial areas and being able to distinguish the sensed signals from each area corresponding to a middle front area, a left front area and a right front area.

9. A belt force limiting system (101) according to claim 7 or 8 ***characterised in* that** said system further comprises speed and/or acceleration sensors which are connected to the restraints control module (103).

10. A belt force limiting system (101) according to anyone of claims 7 to 10, ***characterised in* that** said restraints control module (103) is adapted to generate a control signal to the adaptive belt load limiter (104) which controls the length of safety belt pay out roll at a standard level before the force limiter is activated.

## Patentansprüche

1. Verfahren zur Steuerung eines Gurtkraftbegrenzers (104) für einen Fahrzeugsicherheitsgurt in einem Fahrzeug, versehen mit Sensoren (102, 302) zum Detektieren von Gegenständen vor dem Fahrzeug, welches Verfahren die folgenden Schritte umfasst:
• Anwenden von einem oder mehreren Schließgeschwindigkeits-sensor(en) (102, 302), der bzw. die die relative Geschwindigkeit und Richtung eines Gegenstands in mindestens zwei verschiedenen räumlichen Bereichen erkennen kann bzw. können und die erkannten Signale voneinander unterscheiden kann bzw. können;
• Erzeugen von Sensorsignalen, entsprechend dem erkannten Zustand in den mindestens zwei räumlichen Bereichen, so dass Bereichsspezifische Signale abhängig von der relativen Geschwindigkeit und Richtung des Gegenstands erzeugt werden;
• Senden der Sensorsignale von dem bzw. den Schließgeschwindigkeitssensor(en) (102, 302) zu einem Haltegurtsteuermodul (103);
• Anwenden der Sensorsignale von dem bzw. den Schließgeschwindigkeitssensor(en) (102, 302) im Haltegurtsteuermodul (103) zum Erzeugen eines Steuersignals, welches Steuersignal abhängig von demjenigen räumlichen Bereich, von dem die Signale stammen, erzeugt wird;
• Senden des Steuersignals zu einem adaptiven Gurtbelastungsbegrenzer (104); und
• Steuern des adaptiven Gurtbelastungsbegrenzers (104) gemäß des Steuersignals,
wobei das Haltegurtsteuermodul (103) mit einer Nachschlagetabelle versehen oder verbunden ist, welche Nachschlagetabelle ein Zusammenstoßtypenklassifikationsschema umfasst, so dass verschiedene Zusammenstoßtypen basierend auf den Sensorsignalen von dem bzw. den Schließgeschwindigkeitssensor(en) (102, 302) klassifiziert werden, entsprechend der Detektion der relativen Geschwindigkeit und Richtung eines Gegenstands in den mindestens zwei verschiedenen räumlichen Bereichen, und ein Steuersignal durch das Haltegurtsteuermodul (103) unter Anwendung der Nachschlagtabelle erzeugt wird.

2. Verfahren zur Steuerung eines Gurtkraftbegrenzers (104) nach Anspruch 1, ***dadurch gekennzeichnet, dass*** das eine oder die mehreren Schließgeschwindigkeitssensor(en) (102, 302) drei verschiedene räumliche Bereiche abdeckt bzw. abdecken und die erkannten Signalen von jedem der drei Bereichen entsprechend einem mittleren Vorderbereich, einem linken Vorderbereich und einem rechten Vorderbereich erkennen kann bzw. können.

3. Verfahren zur Steuerung eines Gurtkraftbegrenzers (104) nach einem der vorgehenden Ansprüche, ***dadurch gekennzeichnet, dass*** das Haltegurtsteuermodul (103) weiter mit Eingängen für Dateninputsignale entsprechend der Fahrzeuggeschwindigkeit und/oder - Beschleunigung versehen ist, so dass eine Schweregradeinschätzung des Zusammenstoßes basierend auf den Sensorsignalen von den verschiedenen Bereichen, die von dem bzw. den Schließgeschwindigkeitssensor(en) (102, 302), der Fahrzeuggeschwindigkeit und/oder Fahrzeugbeschleunigung abgedeckt sind, ausgeführt werden kann.

4. Verfahren zur Steuerung eines Gurtkraftbegrenzers (104) nach einem der vorgehenden Ansprüche, ***dadurch gekennzeichnet, dass*** das Haltegurtsteuermodul (103) mit mehreren Sätzen von Nachschlagtabellen versehen ist, wovon die passende anzuwendende Nachschlagtabelle unter Anwendung von mindestens einem der Parameter Ego-Fahrzeuggeschwindigkeit, Ego-Fahrzeugbeschleunigung, Schließgeschwindigkeit eines sich annähernden Gegenstandes oder Gewicht des angegurteten Insassen ausgewählt wird.

5. Verfahren zur Steuerung eines Gurtkraftbegrenzers (104) nach einem der vorgehenden Ansprüche, ***dadurch gekennzeichnet, dass*** das von den Haltegurtsteuermodulen (103) erzeugte Steuersignal mit mehreren Sätzen von Nachschlagtabellen versehen ist, wovon die passende anzuwendende Nachschlagtabelle unter Anwendung von mindestens einem der Parameter Ego-Fahrzeuggeschwindigkeit, Ego-Fahrzeugbeschleunigung, Schließgeschwindigkeit eines sich annähernden Gegenstandes oder Gewicht des angegurteten Insassen ausgewählt wird.

6. Verfahren zur Steuerung eines Gurtkraftbegrenzers (104) nach einem der vorgehenden Ansprüche, ***dadurch gekennzeichnet, dass*** das Steuersignal von dem Haltegurtsteuermodul (103) zu dem adaptiven Gurtbelastungsbegrenzer (104) ein Signal ist, das die Länge der Sicherheitsgurtausrollung an einem Standardniveau vor der Aktivierung des Kraftbegrenzers (104) steuert.

7. Gurtkraftbegrenzungssystem (101) für einen Sicherheitsgurt in einem Fahrzeug, welches System einen oder mehrere Schließgeschwindigkeitssensor(en) (102, 302) zum Detektieren von Gegenständen vor dem Fahrzeug, ein Haltegurtsteuermodul (103), das mit dem bzw. den Schließgeschwindigkeitssensor(en) (102, 302) verbunden ist, um Sensorinputdaten von den Schließgeschwindigkeitssensoren (102, 302) zu empfangen, umfasst, wobei das Haltegurtsteuermodul (103) dafür angepasst ist, die Sensorinputdaten anzuwenden, um ein Outputsteuersignal zu erzeugen, welches System weiter einen adaptiven Gurtbelastungsbegrenzer (104) umfasst, der mit dem Haltegurtsteuermodul (103) verbunden ist, um das Outputsteuersignal von dem Haltegurtsteuermodul (103) zu empfangen und den Gurtbelastungsbegrenzungsvorgang zu bewirken, wobei der eine oder die mehreren Schließgeschwindigkeitssensor(en) (102, 302) die relative Geschwindigkeit und Richtung eines Gegenstands in mindestens zwei verschiedenen räumlichen Bereichen erkennen kann, so dass bereichsspezifische Signale erzeugt werden, und dass das Haltegurtsteuermodul (103) angepasst ist, ein Steuersignal zu dem adaptiven Gurtbelastungsbegrenzer (104) abhängig vom erkannten Zustand in den mindestens zwei räumlichen Bereichen zu erzeugen, ***dadurch gekennzeichnet, dass*** das Haltegurtsteuermodul (103) mit einer oder mehreren Nachschlagtabellen versehen oder verbunden ist, umfassend eine Zusammenstoßtypenklassifikationsschema, so dass verschiedene Zusammenstoßtypen basierend auf den Sensorsignalen von dem bzw. den Schließgeschwindigkeitssensor(en) (102, 302) klassifiziert werden, entsprechend der Detektion der relativen Geschwindigkeit und Richtung eines Gegenstands in den mindestens zwei verschiedenen räumlichen Bereichen, und eventuell dass verschiedene Nachschlagtabellen abhängig von mindestens einem der Parameter: Fahrzeuggeschwindigkeit, Fahrzeugbeschleunigung, Schließgeschwindigkeit eines sich annähernden Gegenstandes oder Gewicht eines angegurteten Insassen verwendet werden.

8. Gurtkraftbegrenzungssystem (101) nach Anspruch 7, ***dadurch gekennzeichnet, dass*** das eine oder die mehreren Schließgeschwindigkeitssensor(en) (102, 302) drei verschiedene räumliche Bereiche abdeckt bzw. abdecken und die erkannten Signalen von jedem Bereich entsprechend einem mittleren Vorderbereich, einem linken Vorderbereich und einem rechten Vorderbereich erkennen kann bzw. können.

9. Gurtkraftbegrenzungssystem (101) nach Anspruch 7 oder 8, ***dadurch gekennzeichnet, dass*** das System weiter Geschwindigkeits- und/oder Beschleunigungssensoren umfasst, die mit dem Haltegurtsteuermodul (103) verbunden sind.

10. Gurtkraftbegrenzungssystem (101) nach einem der Ansprüche 7 bis 10, ***dadurch gekennzeichnet, dass*** das Haltegurtsteuermodul (103) dafür angepasst ist, ein Steuersignal zu dem adaptiven Gurtbelastungsbegrenzer (104) zu erzeugen, das die Länge der Sicherheitsgurtausrollung an einem Standardniveau vor der Aktivierung des Kraftbegrenzers steuert.

## Revendications

1. Procédé de commande d'un limiteur de force de ceinture (104) pour une ceinture de sécurité de véhicule dans un véhicule muni de capteurs (102, 302) pour détecter des objets devant le véhicule, ledit procédé comprenant les étapes consistant à:
• utiliser un ou plusieurs capteurs de vitesse d'obturation (102, 302) capables de détecter la vitesse et direction relatives d'un objet dans au moins deux zones spatiales différentes et étant capables de distinguer les signaux détectés l'un de l'autre;
• générer des signaux de détection correspondant à la condition détectée dans au moins deux zones spatiales si bien que des signaux spécifiques de la zone sont générées en fonction de la vitesse et direction relatives dudit objet;
• transmettre les signaux de détection provenant du capteur ou des capteurs de vitesse d'obturation (102, 302) à un module de commande de retenue (103);
• utiliser les signaux de détection provenant des capteurs de vitesse d'obturation (102, 302) dans le module de commande de retenue (103) pour générer un signal de commande, ledit signal de commande étant généré en fonction de la zone spatiale d'où les signaux sont originaires;
• transmettre ledit signal de commande à un limiteur de charge de ceinture adaptatif (104); et
• commander le limiteur de charge de ceinture adaptatif (104) en fonction du signal de commande,
dans lequel ledit module de commande de retenue (103) est pourvu d'une table de consultation ou relié à celle-ci, ladite table de consultation comprenant un système de classification de catégorie d'accident, si bien que différentes catégories d'accidents sont classées en fonction des signaux de détection provenant du capteur ou des capteurs de vitesse d'obturation (102, 302) correspondant à la détection de la vitesse et direction relatives d'un objet dans les au moins deux différentes zones spatiales et un signal de commande est généré par le module de commande de retenue (103) en utilisant ladite table de consultation.

2. Procédé de commande d'un limiteur de force de ceinture (104) selon la revendication 1, ***caractérisé en ce que*** l'un ou plusieurs des capteurs de vitesse d'obturation (102, 302) couvrent trois différentes zones spatiales et étant capables de distinguer les signaux détectés à partir de chacune des trois zones correspondant à une zone avant du milieu, une zone avant gauche et une zone avant droite.

3. Procédé de commande d'un limiteur de force de ceinture (104) selon l'une quelconque des revendications précédentes, ***caractérisé en ce que*** ledit module de commande de retenue (103) est en outre muni d'orifices pour des signaux d'entrée de données correspondant à la vitesse et/ou l'accélération du véhicule si bien qu'une estimation de gravité d'accident peut être effectuée sur la base des signaux de détection provenant des différentes zones couvertes par le capteur ou les capteurs de vitesse d'obturation (102, 302), la vitesse du véhicule et/ou de l'accélération du véhicule.

4. Procédé de commande d'un limiteur de force de ceinture (104) selon l'une quelconque des revendications précédentes, ***caractérisé en ce que*** ledit module de commande de retenue (103) est pourvu de plusieurs ensembles de tables de consultation dont la table de consultation appropriée à utiliser est sélectionnée en utilisant au moins l'un des paramètres de vitesse du véhicule ego, d'accélération du véhicule ego, de vitesse d'obturation d'un objet approchant ou de poids du passager ceinturé.

5. Procédé de commande d'un limiteur de force de ceinture (104) selon l'une quelconque des revendications précédentes, ***caractérisé en ce que*** le signal de commande généré par les modules de commande de retenue (103) est pourvu de plusieurs ensembles de tables de consultation dont la table de consultation appropriée à utiliser est sélectionnée en utilisant au moins l'un des paramètres de vitesse du véhicule ego, d'accélération du véhicule ego, de vitesse d'obturation d'un objet approchant ou de poids du passager ceinturé.

6. Procédé de commande d'un limiteur de force de ceinture (104) selon l'une quelconque des revendications précédentes, ***caractérisé en ce que*** ledit signal de commande provenant desdits modules de commande de retenue (103) audit limiteur de charge de ceinture adaptatif (104) est un signal qui commande la longueur d'un déroulement de la ceinture de sécurité à un niveau standard avant que le limiteur de force (104) ne soit activé.

7. Système pour limiter la force d'une ceinture (101) pour une ceinture de sécurité dans un véhicule, ledit système comprenant un ou plusieurs des capteurs de vitesse d'obturation (102, 302) pour détecter des objets devant le véhicule, un module de commande de retenue (103) relié au capteur ou aux capteurs de vitesse d'obturation (102, 302) afin de recevoir des données d'entrée de capteur provenant des capteurs de vitesse d'obturation (102, 302), ledit module de commande de retenue (103) étant conçu pour utiliser les données d'entrée de capteur pour générer un signal de commande de sortie, ledit système comprenant en outre un limiteur de charge de ceinture adaptatif (104) relié au module de commande de retenue (103) afin de recevoir le signal de commande de sortie provenant du module de commande de retenue (103) et effectuer l'action pour limiter la charge de la ceinture,
l'un ou plusieurs des capteurs de vitesse d'obturation (102, 302) est/sont capables de détecter la vitesse et direction relatives d'un objet dans au moins deux différentes zones spatiales si bien que des signaux spécifiques de la zone sont générés et que le module de commande de retenue (103) est adapté pour générer un signal de commande pour le limiteur de charge de ceinture adaptatif (104) en fonction de la condition détectée dans au moins deux zones spatiales, **ca*ractérisé en ce que*** ledit module de commande de retenue (103) est pourvu d'une ou de plusieurs tables de consultation ou relié à celles-ci comprenant un système de classification de catégorie d'accident,
si bien que différentes catégories d'accident sont classées en fonction des signaux de détection provenant du capteur ou des capteurs de vitesse d'obturation (102, 302) correspondant à la détection de la vitesse et direction relatives d'un objet dans les au moins deux différentes zones spatiales, et, éventuellement, que différentes tables de consultation sont utilisées en fonction d'au moins l'un des paramètres: la vitesse du véhicule, l'accélération du véhicule, la fermeture d'obturation d'un objet approchant ou le poids du passager ceinturée.

8. Système pour limiter la force d'une ceinture (101) selon la revendication 7, ***caractérisé en ce que*** l'un ou plusieurs desdits capteurs de vitesse d'obturation (102, 302) couvrent trois différentes zones spatiales et étant capables de distinguer les signaux détectés à partir de chacune des trois zones correspondant à une zone avant du milieu, une zone avant gauche et une zone avant droite.

9. Système pour limiter la force d'une ceinture (101) selon la revendication 7 ou 8, ***caractérisé en ce que*** ledit système en outre comprend des capteurs de vitesse et/ou d'accélération qui sont reliés au module de commande de retenue (103).

10. Système pour limiter la force d'une ceinture (101) selon l'une quelconque des revendications 7 à 10, ***caractérisé en ce que*** ledit module de commande de retenue (103) est adapté pour générer un signal de commande audit limiteur de charge de ceinture adaptatif (104) qui commande la longueur d'un déroulement de la ceinture de sécurité à un niveau standard avant que le limiteur de force ne soit activé.
